Europäisches Patentamt

European Patent Office

Office européen des brevets

(11) Veröffentlichungsnummer: **0 007 397**
**A1**

## EUROPÄISCHE PATENTANMELDUNG

(21) Anmeldenummer: 79101636.3

(22) Anmeldetag: 29.05.79

(51) Int. Cl.³: **F 16 B 12/00**

(30) Priorität: 24.07.78 DE 7822080 U

(43) Veröffentlichungstag der Anmeldung:
06.02.80 Patentblatt 80/3

(84) Benannte Vertragsstaaten:
AT BE CH DE FR GB IT LU NL SE

(71) Anmelder: Von Rüdgisch, Edgar
Belvederestrasse 76
D-5000 Köln-Müngersdorf(DE)

(72) Erfinder: Von Rüdgisch, Edgar
Belvederestrasse 76
D-5000 Köln-Müngersdorf(DE)

(74) Vertreter: Berkenfeld, Helmut
An der Schanz 2
D-5000 Köln 60(DE)

(54) Verbindungsbeschlag.

(57) Die Erfindung betrifft einen Verbindungsbeschlag (12) aus einer aus Flachstahl gebogenen Lasche mit zwei hintereinanderliegenden Schlitzen (22) und zwei Doppelkopfschrauben (34). Die Lasche wird in eine Nut (26) eines Möbelteiles aus Holz eingesetzt und dort verschraubt. Die Doppelkopfschrauben (34) werden in ein anderes Möbelteil (32) aus Holz eingeschraubt. Zum Verbinden der beiden Möbelteile werden die Doppelkopfschrauben (34) in eine Öffnung in den Längsschlitzen (22) eingesteckt und mit ihrem Möbelteil (32) so verschoben, daß ihre Oberköpfe (36) die die Längsschlitze (22) begrenzenden Schenkel (20) untergreifen und sich dort verklemmen. Damit werden die beiden Möbelteile (28 und 32) unverrück- und unverdrehbar miteinander verbunden.

FIG. 1

FIG. 5

FIG. 4

EP 0 007 397 A1

## Verbindungsbeschlag

Die Erfindung betrifft einen Verbindungsbeschlag mit doppelkopfschrauben zum Verbinden von insbesondere einem Sitz mit anderen Möbelteilen aus einer aus Flachstahl gebogenen Lasche mit mindestens einem auf eines der zu verbindenden Teile aufsetzbaren Flansch mit einem Loch zum Einführen einer Befestigungsschraube und mit mindestens einem über eine Brücke mit dem Flansch verbundenen Klemmteil, das in einem Abstand und in etwa parallel zu dem Flansch verläuft, aus zwei Schenkeln und einem zwischen diesen begrenzten Längsschlitz zum Einführen der Doppelkopfschraube.

Solche Verbindungsbeschläge sind bekannt (DE-OS 2 501 099). Bei einem bekannten Verbindungsbeschlag hat der Längsschlitz eine veränderliche Breite und kann sich auch bis in die Brücke erstrecken.

Mit solchen Verbindungsbeschlägen werden zum Beispiel die Seitenteile von Sitzmöbeln mit den Sitzen und/oder Rückenteilen verbunden. Hierzu wird in die Schmalseiten von Sitz und Rücken eine Vertiefung eingefräst. Ein Verbindungsbeschlag wird in diese Vertiefung eingelegt und bei den bekannten Beschlägen durch Einschrauben von je einer oder zwei Befestigungsschrauben gehalten. Die weiteren sogenannten Doppelkopfverbindungsschrauben werden so in die Seitenteile eingeschraubt, daß sie bei Anlegen der Seitenteile an die Schmalseiten von Sitz und Rücken an die Längsschlitze anstoßen. Mit ihren zwischen ihren Köpfen liegenden Schaftabschnitten werden sie an den breiteren Abschnitt der Längsschlitze angelegt, der sich im allgemeinen in der Brücke oder im Klemmteil neben dieser befindet, und in den Schlitz eingeschoben. Dabei laufen die Oberköpfe der Schrauben auf die nach innen ansteigenden Schlitzabschnitte auf, wodurch die Seitenteile an Sitz und Rücken angezogen und schließlich an diese angepreßt werden. Eine sichere Verbindung von zwei Möbelteilen, bei der sich die Teile nicht gegeneinander verdrehen können, erfordert mindestens zwei der bekannten Verbindungsbeschläge, wodurch mehr Platz (Raum) erforderlich wird. Eine in einen Längsschlitz eingeführte und in diesem verklemmte Doppelkopf-Verbindungsschraube kann sich in diesem um ihre Längsachse drehen. Das heißt, daß ein Verbindungsbeschlag mit einem Schlitz allein nicht ausreicht, um zwei Teile fest, unverrückbar und unverdrehbar miteinander zu verbinden. Von diesem bekannten Verbindungsbeschlag ausgehend stellt sich damit die Aufgabe, einen solchen Beschlag so auszubilden, daß er auch eine verdrehungssichere Verbindung auf kleinstem Raum ermöglicht. Die Lösung für diese Aufgabe ergibt sich nach der Erfindung bei einem Verbindungsbeschlag der bekannten Art dadurch, daß sie zwei Klemmteile mit einem zwischen diesen und je einem an den freien Enden vorgesehenen Flansch aufweist, wobei Klemmteile und Flansche über die Brücken miteinander verbunden sind. Der erfindungsgemäße Verbindungsbeschlag weist somit zwei Klemmteile mit zwei Längsschlitzen auf, in die insgesamt zwei Verbindungsdoppelkopfschrauben eingeschoben werden. Diese in das gegenüberliegende Möbelteil eingeschraubten Verbindungsdoppelkopfschrauben weisen einen gegenseitigen Abstand voneinander auf. Das heißt, daß sich kein einzelnes Verbindungsteil mehr um die Längsachse, die durch Schrauben gebildet wird, drehen kann. Zwei Verbindungsschrauben verhindern eine Drehung. Sowohl von der Funktion als auch von der erreichten Festigkeit sind die beiden Teile Verbindungsbeschlag und Doppelkopf-Verbindungsschraube nicht voneinander zu trennen. Das eine Teil hat ohne das andere zur Lösung der Gesamtaufgabe keinen Wert. Nur beide Teile gemeinsam führen zu der gewünschten Verbindung zwischen den Möbelteilen.

Die erfindungsgemäße Ausbildung des Verbindungsbeschlages stellt daher sicher, daß sich schon mit einem einzigen Beschlag eine verdrehungssichere Verbindung ergibt. Der erfindungsgemäße Verbindungsbeschlag weist zwei Klemmteile und drei Flansche mit je einem Schlitz auf. Folglich wird sie mit drei Befestigungsschrauben befestigt. Bei Verwendung des bekannten Beschlages benötigt man für den gleichen Zweck zwei dieser Beschläge mit insgesamt vier Schrauben und mehr Platz. Bei einer Massenfertigung mit hohen Stückzahlen stellt schon der Wegfall dieser einzigen Schraube plus Beschlag eine große Ersparnis dar. Die Fertigung von zwei Beschlägen verlangt mehr Material, erschwert die automatische Zufuhr, und das Anschrauben mit vier Befestigungsschrauben verlängert die Arbeitszeit. Es kommt hinzu, daß nur eine einzige Nut oder Vertiefung zur Aufnahme des einen Beschlages gefräst werden muß. Weiter ist zu beachten, daß in manchen Fällen kein Raum zum Anbringen von zwei getrennten Beschlägen vorhanden ist.

Zum Erzielen einer sicheren starren Verbindung zwischen den beiden zu verbindenden Teilen ist weiter vorgesehen, daß der erfindungsgemäße Verbindungsbeschlag aus steifem, nicht federndem Stahl hergestellt ist. Dem gleichen Zweck dient, daß er eine Stärke von mindestens 1,8 mm aufweist und damit stärker als die bekannten Beschläge, die aus Federstahl gefertigt werden, ist. Infolge des Vorhandenseins von zwei Klemmteilen und damit zwei Längsschlitzen in einem einzigen Verbindungsbeschlag können die Schlitze kürzer als bei den bekannten Beschlägen ausgebildet werden. Erfindungsgemäß hat ein Längsschlitz eine Länge von zirka 15 mm, vorzugsweise 12 mm.

Der erfindungsgemäße, aus der Lasche mit den Doppelkopfschrauben bestehende Verbindungsbeschlag hält der Dauerbelastung, der er bei einem Sitzmöbel ausgesetzt ist, stand. Die bei einem Sitzmöbel vorkommende Belastung kann bis zu 500 kg pro Verbindungspunkt betragen. Der hohe Wert ergibt sich aus der Hebelwirkung, mit der die Kräfte am Verbindungspunkt angreifen. Ein eingeleimter Holzdübel mit einem Durchmesser von 12 mm hält dieser Belastung stand. Der bekannte metallische Verbindungsbeschlag hält dieser Belastung nicht stand. Wegen seiner Herstellung aus Federstahl fehlt ihm die erforderliche Starrheit.

Bei dem bekannten Verbindungsbeschlag haben die sogenannten weiteren Verbindungsschrauben, die in das gegenüberliegende Möbelteil eingeschraubt werden, einen Doppelkopf. Daher ergibt sich ihr Name Doppelkopfschraube. Der Oberkopf weist einen Innensechskant oder einen Kreuzschlitz auf. Hierdurch wird der gesamte Querschnitt des Schaftes zwischen den beiden Köpfen, insbesondere an der Verbindungsstelle zwischen dem Oberkopf und dem Schaft geschwächt. Durch den Innensechskant erhält der Schaft die Form eines Rohres. Dies führt dazu, daß schon beim Einschrauben 10 bis 15 % der Köpfe abreißen. Bei Einschrauben in Hartholz reißt eine noch größere Anzahl von Köpfen ab.

Zum Erhöhen des Widerstandsmomentes des Schraubenkopfes, ohne dabei das Ansetzen eines Schlüssels zu erschweren, ist nach der Erfindung vorgesehen, daß der Kopf massiv ausgebildet ist und einen Außenvielkant aufweist.

Am Beispiel der in der Zeichnung gezeigten Ausführungsform wird die Erfindung nun weiter beschrieben. In der
Zeichnung ist:

Fig. 1 eine perspektivische Darstellung des Verbindungsbeschlages,

Fig. 2 eine Seitenansicht,

Fig. 3 eine Aufsicht,

Fig. 4 eine Seitenansicht, teilweise im Schnitt, eines Möbelteiles mit einem in eine Vertiefung eingesetzten Beschlag,

Fig. 5 eine Seitenansicht, teilweise im Schnitt, eines Möbelteiles mit zwei Doppelkopfschrauben vor dem
Einschieben in die beiden Längsschlitze,

Fig. 6 eine Seitenansicht, teilweise im Schnitt, des
Verbindungsbeschlages mit Darstellung der Rastfläche,

Fig. 7 eine perspektivische Darstellung ähnlich Fig.
1 einer zweiten Ausführungsform mit einem um 90° abgebogenen Endflansch,

Fig. 8, 9, 10 und 11 je eine Ansicht entsprechend den

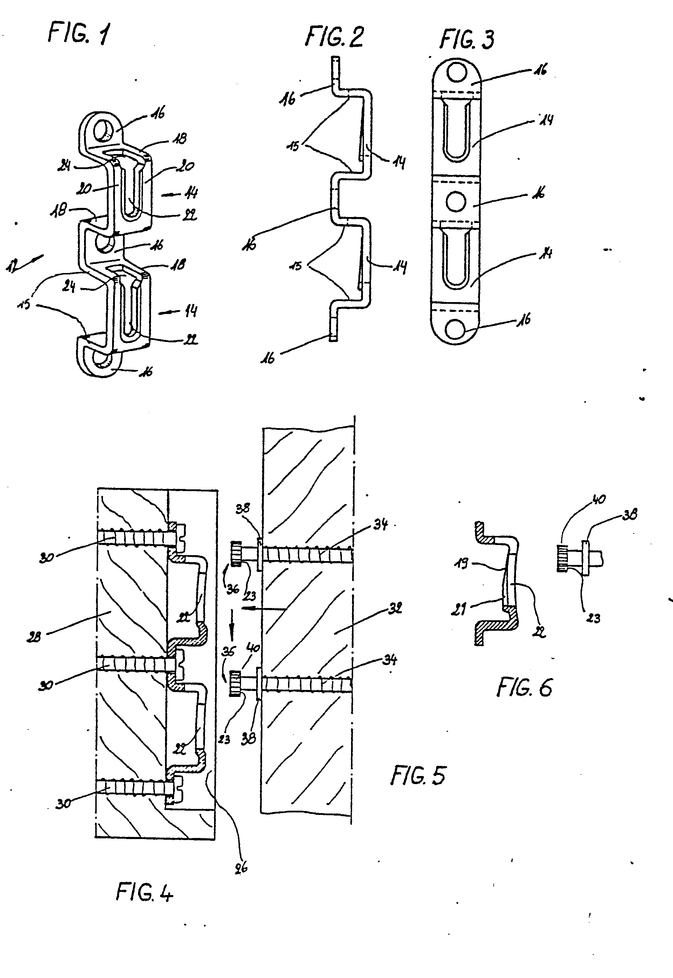

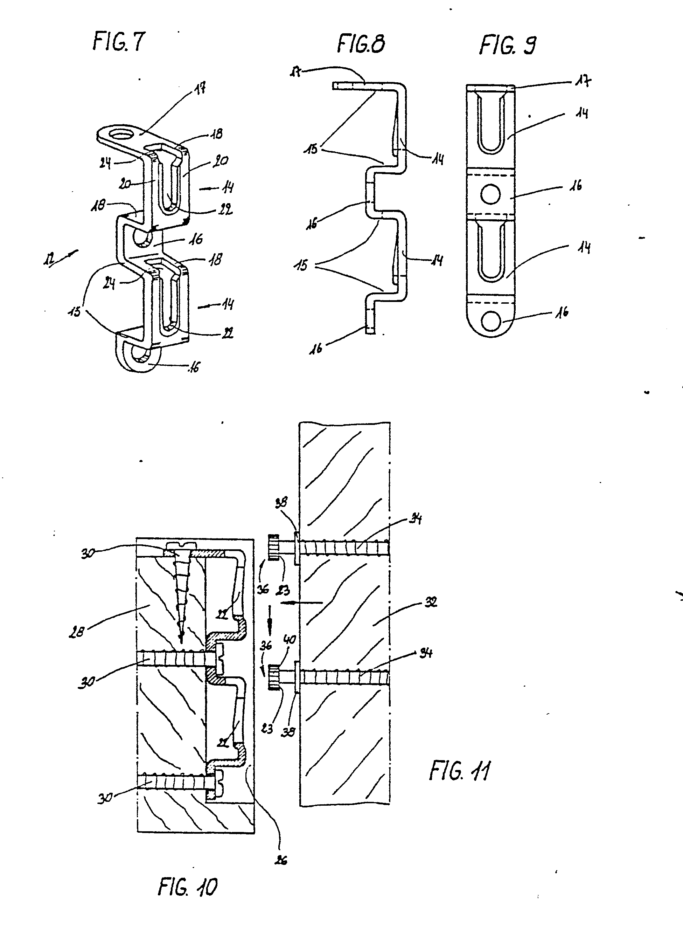

Figuren 2 bis 5 der in Fig. 7 gezeigten zweiten Ausführungsform.

Der Verbindungsbeschlag 12 besteht aus den beiden Klemmteilen 14, den drei Flanschen 16 bzw. 17 und den beiden
Brücken 18. Die Klemmteile 14 bestehen ihrerseits aus
den beiden Schenkeln 20 und dem zwischen diesen verlaufenden Längsschlitz 22. Die Längsschlitze 22 setzen sich
bis in die Brücken 18 fort und bilden dort die Schlitzabschnitte 24.

- 6 -

Nach der Darstellung in 'Fig. 4 ist der Verbindungsbeschlag 12 in eine Nut 26 in einem Möbelteil 28 eingesetzt und mit Befestigungsschrauben 30 gehalten. In das
andere in Fig. 5 dargestellte Holzteil 32 sind die Doppelkopfbefestigungsschrauben 34 eingeschraubt. Sie weisen einen Oberkopf 36 und im Abstand dazu einen Unterkopf 38 auf. Mit dem Unterkopf 38 läßt sich genau bestimmen, wie weit die Schraube eingeschraubt wird und
damit wie weit der Oberkopf 36 über das eine Möbelteil
übersteht. Die Oberköpfe 36 weisen die Außenvielkante
40 auf.

Die beiden zu verbindenden Holzteile 28 und 32 werden
so vorbereitet, wie es die Figuren 4 und 5 bzw. 10 und
11 zeigen. Dann werden sie in eine gegenseitige Lage gebracht, die der gegenseitigen Lage der Figuren 4 und 5
bzw. 10 und 11 entspricht. Das Holzteil 32 wird dann in
Richtung der eingezeichneten Pfeile zuerst auf das Holzteil 28 zu bewegt und dann nach unten geschoben. Dabei
gelangen die Schraubenköpfe 36 zuerst in die breiteren
Schlitzabschnitte 24 und hintergreifen dann bei der Abwärtsbewegung des Holzteiles 32 die Schenkel 20. Infolge
des teilweise schrägen Verlaufs der Schenkel 20 entlang
der Schrägen 19 und infolge der Rasterfläche 21 werden
dabei die Schraubenköpfe 36 nach links und damit die beiden Holzteile fest aufeinandergezogen. Es entsteht eine
unverrückbare verdrehungsfeste Verbindung. Die Verbindung
ist so fest, daß sie nur mit starken Hammerschlägen gelöst werden kann.

Bei der in den Figuren 7 bis 11 gezeigten zweiten Ausführungsform ist der eine hier mit 17 bezeichnete Endflansch
gegenüber seiner Lage bei der ersten Ausführungsform um
90° abgebogen. Diese zweite Ausführungsform des Verbindungsbeschlages wird dort verwendet, wo die Nut oder Vertiefung 26 angrenzend an die Stirnseite in ein Holzteil
eingefräst wird. Der Endflansch 17 liegt auf dieser
Stirnseite auf.

Patentansprüche:

1. Verbindungsbeschlag mit Doppelkopfschrauben zum Verbinden von insbesondere einem Sitz mit anderen Möbelteilen aus einer aus Flachstahl gebogenen Lasche mit mindestens einem auf eines der zu verbindenden Teile aufsetzbaren Flansch mit einem Loch zum Einführen einer Befestigungsschraube und mit mindestens einem über eine Brücke mit dem Flansch verbundenen Klemmteil, das in einem Abstand und in etwa parallel zu dem Flansch verläuft, aus zwei Schenkeln und einem zwischen diesen begrenzten Längsschlitz zum Einführen der Doppelkopfschraube, dadurch gekennzeichnet, daß sie zwei Klemmteile (14) mit einem zwischen diesen und je einem an den freien Enden vorgesehenen Flansch (16, 16, 16; 16, 16, 17) aufweist, wobei Klemmteile und Flansche über die Brücken (15, 18) miteinander verbunden sind.

2. Verbindungsbeschlag nach Anspruch 1, dadurch gekennzeichnet, daß er aus steifem, nicht federndem Stahl hergestellt ist.

3. Verbindungsbeschlag nach Anspruch 1 und 2, dadurch gekennzeichnet, daß er eine Stärke von mindestens 1,8 mm aufweist.

4. Verbindungsbeschlag nach Anspruch 1 bis 3, dadurch gekennzeichnet, daß die in den Klemmteilen (14) ausgebildeten Längsschlitze (22) zueinander parallele Begrenzungswände aufweisen.

5. Verbindungsbeschlag nach Anspruch 1 bis 4, dadurch gekennzeichnet, daß die in den Klemmteilen (14) verlaufenden Längsschlitze (22) eine Länge von ca. 15 mm, vorzugsweise 12 mm, aufweisen.

6. Verbindungsbeschlag nach Anspruch 1 bis 5, dadurch gekennzeichnet, daß auf den Innenseiten der die Längsschlitze (22) begrenzenden Schenkel (20) Schrägen (19) vorgesehen sind und diese auf eine Rastfläche (21) auslaufen, an der die Innenseite (23) des Oberkopfes (36) der Doppelkopfbefestigungsschraube (34) voll anliegt.

7. Verbindungsbeschlag nach Anspruch 1 bis 6, dadurch gekennzeichnet, daß der zum Anziehen verwendete Oberkopf (36) der Doppelkopfbefestigungsschraube (34) ohne Schraubschlitz, Kreuzschlitz oder Innensechskant massiv mit einem Außenvielfkant (40) ausgebildet ist.

8. Verbindungsbeschlag nach Anspruch 1 bis 7, dadurch gekennzeichnet, daß einer der an einem freien Ende vorgesehenen Flansche (17) gegenüber den anderen Flanschen (16) um 90° abgebogen ist.

FIG. 1

FIG. 2

FIG. 3

FIG. 4

FIG. 5

FIG. 6

FIG. 7

FIG. 8

FIG. 9

FIG. 10

FIG. 11

**Europäisches Patentamt**

# EUROPÄISCHER RECHERCHENBERICHT

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| | AT - B-18 875 (KÜCKELHAUS)  * Fig. 6 *  -- | 1 | F 16 B 12/00 |
| | AT - B - 163 663 (MEIXNER)  * Fig. 2 *  -- | 1 | |
| | FR - A - 1 399 609 (CARLIER)  * Fig. 1 *  -- | 1 | |
| | BE - A - 712 235 (DEXION)  -- | 1 | **RECHERCHIERTE SACHGEBIETE (Int. Cl.³)** |
| | DE - C - 921 406 (BAYER)  -- | 1 | A 47 B 95/00  F 16 B 5/07.  F 16 B 12/00 |
| A | CH - A - 380 908 (EGELAND)  ---- | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 26-09-1979 | ZAPP |